# EUROPEAN PATENT SPECIFICATION

(11) **EP 0 729 400 B1**
(45) Date of publication and mention of the grant of the patent: **05.08.1998**
(21) Application number: 95901663.5
(22) Date of filing: 16.11.1994
(51) Int. Cl.: B25J 19/06, F16P 3/14, G01V 8/10

(54) **SAFETY RESET DEVICE**
SICHERHEITSNULLSTELLEINRICHTUNG
DISPOSITIF DE REMISE A ZERO DE SECURITE

(30) Priority: 16.11.1993 SE 9303785
(43) Date of publication of application: 04.09.1996
(73) Proprietor: AB LIROS ELEKTRONIK, 200 39 Malmö (SE)
(72) Inventor: NILSSON, Bo, S-291 44 Kristianstad (SE); JÖNSSON, Ruben, S-227 62 Lund (SE)
(74) Representative: Perklev, Karin Cecilia
(86) International application number: SE9401079
(87) International publication number: WO9513906

(56) References cited:
- EP-A- 0 111 009
- EP-A- 0 253 000
- WO-A-90/08333
- WO-A-91/09354
- SE-B- 465 067
- US-A- 4 818 866

## Description

The present invention relates to a safety reset device intended for use together with a personal safety protection device, comprising a reset switch; means for generating a reset signal, said generating means being so arranged that the reset switch must have been both closed and opened to generate the reset signal; two reset channels, each comprising an input from a personal safety protection device, an output, holding means for the output and starting means arranged to close the output and activate the holding means when a reset signal is received and the input is closed.

Personal safety protection devices are used, for example, around industrial robots to prevent personnel from entering the working area of the robot and risking to be injured when the robot is still operating. A personal safety protection device may consist of light beams or light curtains forming a border around the working area of the robot and emitting a stop signal to the robot when broken, or a contact mat emitting a stop signal to the robot when stepped on, or a fence having a gate emitting a stop signal when opened, or the like. When the robot has been stopped by breaking the personal safety protection devices, it can be restarted only with the aid of a reset switch located outside the working area of the robot.

For greater safety, the personal safety protection devices are generally doubled, such that, if one fails, a stop should nevertheless be obtained by means of the other. The personal safety protection devices and the reset switch are coupled to a safety reset device monitoring the inputs from the personal safety protection devices in such a manner that both outputs to the robot can only be closed if both inputs from the personal safety protection devices are closed. Moreover, it monitors the reset switch, which must have been both closed and opened to make it possible to close the outputs. Thus, if the reset button is short-circuited, no reset signal is generated. Finally, the outputs are also monitored, implying that both must have been opened before resetting in order to enable them to be closed when the reset signal is received.

Swedish Patent SE-B-465 067 describes a safety reset device according to the preamble of claim 1 and having two reset channels with a respective input from the personal safety protection device and also a reset switch, which, when it is closed and the outputs are open, operates a first relay, entailing the charging of a capacitor. When the reset switch is opened, the first relay is released and the capacitor is discharged through a second relay. The second relay has a relay contact in each reset channel. When the relay contact of the second relay in the first reset channel is closed and the input from the personal safety protection device is closed, a third relay is operated, which is located in this reset channel. The third relay becomes holding and closes the pertaining output to a machine. The second reset channel operates in the same way.

This known safety reset device thus contains four relays. As is known, relays are however expensive and bulky components. It therefore is desirable to provide a safety reset device which has an equally reliable function, but which is less expensive and less bulky.

This is achieved by means of a reset safety device of the type which is described by way of introduction and which has the features stated in claim 1. In the safety reset device according to the invention, at least the starting means and the holding means are completely made up of electronic components, thus making it possible to reduce the number of relays. In this context, it should be pointed out that even if the starting means and the holding means are completely made up of electronic components, they may use an output relay for their function within the scope of the invention. Moreover, the starting means and the holding means might consist of one and the same component.

Exchanging relays for electronic components however means that the device becomes more sensitive to interference. This problem has been solved by the corresponding electronic components in the two channels being substantially electrically mirror-inverted. If one component in the first reset channel operates closing to plus, the corresponding component in the other channel thus operates closing to minus. Since interference generally is either positive or negative, this means that there is but a very small risk that the corresponding components in the two channels should be affected, which in turn means that there is a minimal risk that the two channels should at the same time incorrectly close the outputs or fail to open the outputs upon receipt of a stop signal from an input.

Advantageously, also the means for generating a reset signal are completely made up of electronic components, making it possible to further reduce the number of relays.

The electronic components may, in each reset channel, consist of e.g. a microprocessor.

Further embodiments of the invention will appear from the subclaims.

The present invention will now be described in an embodiment of the invention with reference to the accompanying drawings, in which
Fig. 1 is a block diagram of an embodiment of the invention, and
Fig. 2 is a circuit diagram of the embodiment of the invention shown in Fig. 1.

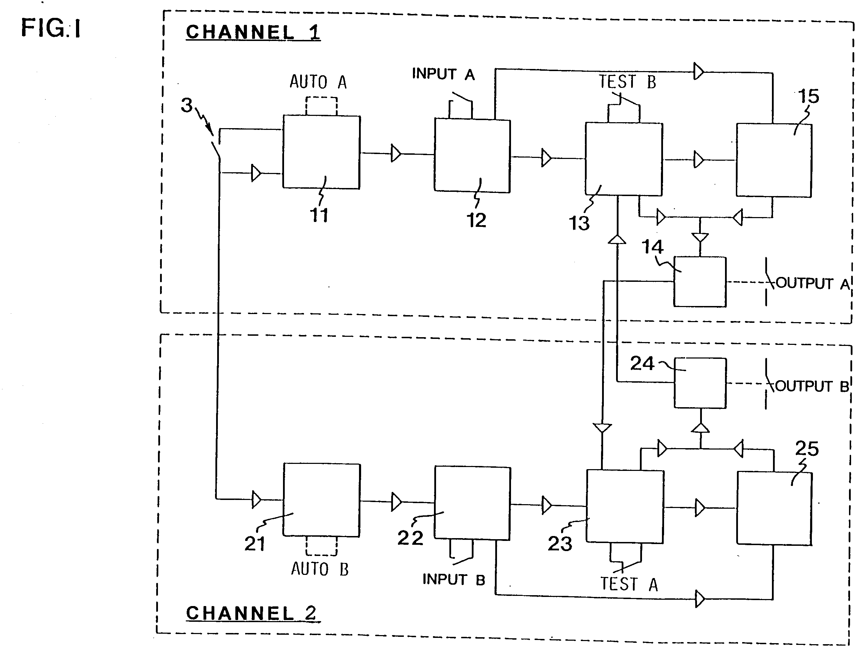

Fig. 1 shows an embodiment of a safety reset device according to the invention, comprising two reset channels 1 , 2 and a reset switch 3 common to these channels. Each reset channel comprises in series a reset circuit 11 and 21, respectively, for generating a reset signal, which may be static or pulsed, an input circuit 12 and 22, respectively, having an input A and B, respectively, from a personal safety protection device, a starting circuit 13 and 23, respectively, connected to an output relay 14 and 24, respectively, and a holding circuit 15 and 25, respectively, in turn connected to the input 12 and 22, respectively. The starting circuits 13 and 23 also have an input from the output relay 24 and 14, respectively, in the other reset channel.

The device operates as follows.

When the reset switch 3 has been closed and is thereafter opened, the reset circuits 11 and 21 generate a respective reset signal, which, if the inputs A and B in the input circuits 12 and 22, respectively, are closed, is passed on to the starting circuits 13 and 23, respectively, operating the output relays 14 and 24, respectively, if the output relays 24 and 14, respectively, in the other reset channel are released or have been closed a shorter time than a predetermined time. The starting circuit also activates the holding circuits 15 and 25, respectively, holding the output relay operated as long as the inputs A and B, respectively, are closed.

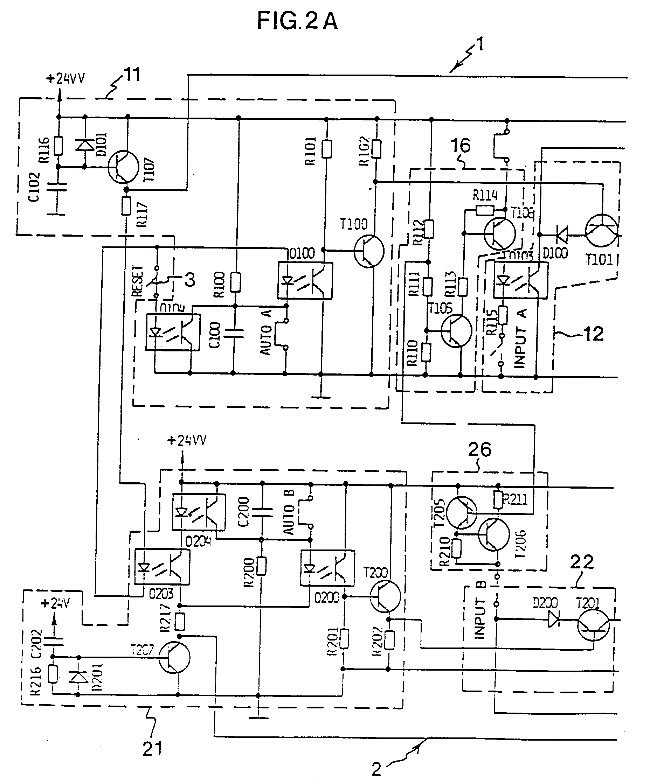

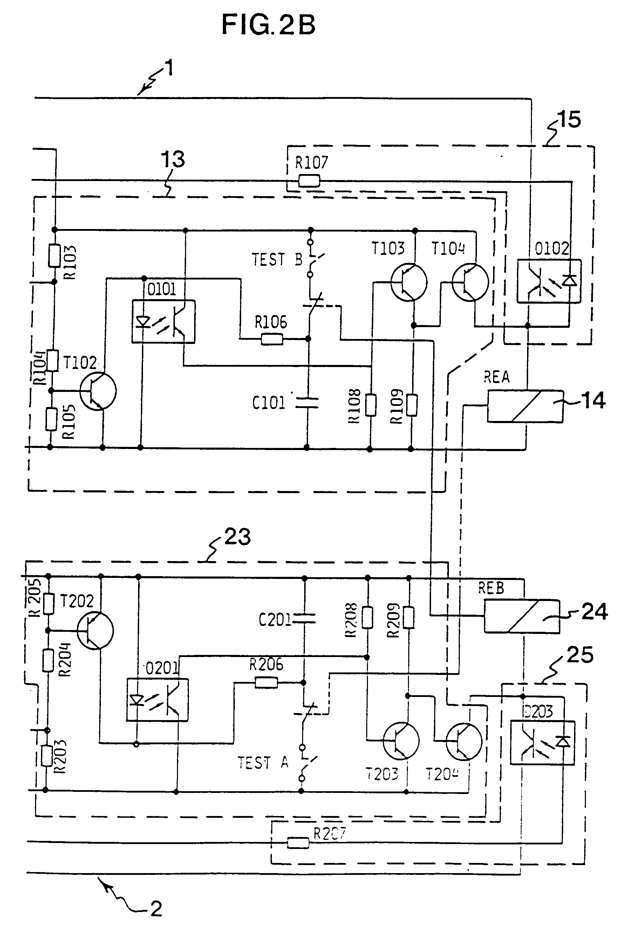

Fig. 2 shows a circuit diagram for the embodiment of the invention shown in Fig. 1. In this circuit diagram, the components corresponding to the respective blocks in Fig. 1 have been encircled and identified by reference numerals.

The reset circuit 11 comprises a resistor R116 and a capacitor C102 which are connected in series between the supply voltage +24V and ground. A diode D101 is connected in parallel in the reverse direction over the resistor R116. The junction between the resistor R116 and the capacitor C102 is connected to the base of a pnp transistor T107, whose collector is connected to the supply voltage and whose emitter is connected to a resistor R117, connected in series with the light-emitting diode in an optocoupler O203 in the other channel 2. A resistor R100 in series with a capacitor C100 is connected between the supply voltage and ground. The junction between the resistor R100 and the capacitor C100 is connected to the cathode of the light-emitting diode in an optocoupler O100, and to the collector of the transistor in another optocoupler O104. The anode of the light-emitting diode in this optocoupler O104 is connected to the first pole of the reset switch 3, whose second pole is connected to the cathode of the light-emitting diode in the optocoupler O203. The cathode of the light-emitting diode in the optocoupler O104 is connected to ground, as is also the emitter of the transistor of the same optocoupler. The anode of the light-emitting diode in the optocoupler O100 is connected to the junction between the cathode of the light-emitting diode in the optocoupler O203 and the second pole of the reset switch 3, while its cathode is connected to a first pole of an automatic reset input A, whose second pole is connected to ground. When automatic reset is desired, the automatic reset input Auto A is strapped. The collector of the transistor in the optocoupler O100 is connected to a resistor R101, in turn connected to the supply voltage. The collector is further connected to the base of an npn transistor T100. The emitter of the transistor of the optocoupler O100 is connected to ground, like the emitter of the transistor T100. The collector of the transistor T100 is connected via a resistor R102 to the supply voltage and also forms an output which is connected to the starting circuit 13.

The reset circuit 21 is designed in a corresponding way, but is electrically mirror-inverted. Components having equivalent parts in the reset circuit 11 are designated by the same reference numerals, the first figure, however, being 2 instead of 1. Moreover, it should be pointed out that the transistors T200 and T207 are pnp transistors.

The reset circuit 11 operates as follows. When the reset switch 3 is closed, the current circuit from the transistor T107 closes to minus via the resistor R117, the light-emitting diode in the optocoupler O203, the light-emitting diode in the optocoupler O204, the reset switch 3 and the light-emitting diode in the optocoupler O104, the light-emitting diodes in the optocoupler O203 and the optocoupler O104 being lit. The voltage over the light-emitting diode in the optocoupler O100, which is equal to the voltage over the light-emitting diode in the optocoupler O104 minus the collector-emitter voltage over the transistor in the same optocoupler, is however too small in order that this should be lit. The capacitor C100, which before the closing of the reset switch 3, has been charged via the resistor R100, is discharged when closing the reset switch through the transistor in the optocoupler O104. When the reset switch 3 is thereafter opened, the capacitor C100 is again charged via the resistor R100 and the light-emitting diode in the optocoupler O100. During charging, the voltage over the light-emitting diode LO100 becomes sufficiently high for a short time for this to be lit. It is lit until the potential on the cathode of the light-emitting diode becomes too high on account of the charging of the capacitor C100. When the light-emitting diode LO100 is lit, its transistor becomes conducting, the previously conducting transistor T100 being cut off so as to generate a positive reset signal on the output of its collector. This reset signal is forwarded to the input circuit 12. To prevent automatic reset upon voltage turn-on in the first reset channel, the voltage on the cathode of the light-emitting diode in the optocoupler O100 must be higher than or equal to the voltage on its anode minus the ignition voltage of the light-emitting diode. Since the capacitor C100 may be discharged upon voltage turn-on, the voltage on the anode of the light-emitting diode must rise more slowly than the voltage over the capacitor. This is ensured by the capacitor C100, the resistor R116, the diode 101 and the transistor T107 if R116 * C102 exceeds R100 * C100.

The reset circuit 21 operates in a corresponding manner and emits on its output a negative reset signal.

The input circuit 12 comprises an input A from a personal safety protection device, this input being connected to ground. The positive pole of the input is connected to a resistor R115, in turn connected to the cathode of a light-emitting diode in an optocoupler O103. The anode of the light-emitting diode is connected to the collector of a pnp transistor T106, whose emitter is connected to the supply voltage via a strapped input. The emitter of the transistor in the optocoupler O103 is connected to ground, while its collector is connected to the cathode of a diode D100, whose anode is connected to the emitter of an npn transistor T101, the base of which is connected to the output of the reset circuit 11 and the collector of which forms the output to the starting circuit 13.

The input circuit 22 lacks the optocoupler O103 and the resistor 115, but otherwise is made up of the same components as the input circuit 12. Moreover, it is electrically mirror-inverted in relation to the input circuit 12.

The input circuit 12 operates in the following way.

When the input A is closed, the light-emitting diode in the optocoupler O103 is lit, the transistor in this optocoupler becoming conducting, such that the cathode of the diode D100 has a low voltage. If a reset signal is then obtained from the reset circuit 11 on the base of the transistor T101, this becomes conducting and generates a reset signal on the collector output to the starting circuit 13. If, on the other hand, the input A is not closed when the reset signal comes from the reset circuit 11, the transistor T101 does not become conducting and no reset signal is received on the output of the input circuit 12.

The input circuit 22 operates as follows.

The starting circuit 13 includes three resistors R103, R104 and R105 connected in series between the supply voltage and ground. The output from the input circuit 12 is connected to the junction between the resistors R103 and R104. The junction between the resistor R104 and the resistor R105 is connected to the base of an npn transistor T102, whose emitter is connected to ground and whose collector is connected to the anode of a light-emitting diode in an optocoupler O101, the cathode of the light-emitting diode being connected to ground. The collector of the transistor of the optocoupler O101 is connected to the supply voltage, while its emitter is connected to ground via a resistor R108. The anode of the light-emitting diode in the optocoupler O101 is further connected to the resistor R106, in turn connected to the junction between a capacitor C101, whose other pole is connected to ground, and two series-connected relay contacts, one of which consists of the test input B and the other of a relay contact for the output relay 24 in the other channel 2. The junction between the emitter of the transistor in the optocoupler O101 and the resistor R108 is connected to the base of a pnp transistor T103, whose emitter is connected to the supply voltage and whose collector is connected to ground via a resistor R109. The collector of the transistor T103 is also connected to the base of a pnp transistor T104, whose emitter is connected to the supply voltage and whose collector is connected to the output relay 14 and to the holding circuit 15.

The starting circuit 23 is made up in a corresponding manner, but with electrical mirror-inversion, the transistor T202 being a pnp transistor and the transistors T203 and T204 being npn transistors.

The purpose of the starting circuits is, when a reset signal is received on the output from the input circuit, to operate the output relay and activate the holding circuit which should then hold the relay operated until the input is closed. In the starting circuits, there is a simultaneity requirement between the two reset channels, which means that one starting circuit can only operate the output relay if the output relay in the other channel is released or has been operated maximally for a predetermined time.

The simultaneity requirement functions as follows in respect of the first reset channel: When the output relay 24 in the second reset channel has been released, the capacitor C101 is charged via the test input Test B and the control contact for the output relay 24. When one of these contacts is opened, the capacitor C101 is disconnected from the supply voltage and instead starts being discharged through either the light-emitting diode in the optocoupler O101 or the transistor T102. When there is no reset signal, the transistor T102 is conducting and thus short-circuits the light-emitting diode in the optocoupler O101, the capacitor C101 being discharged through the capacitor T102, and nothing else happens. If a reset signal is received on the output from the transistor T101, the transistor T102 is cut off and the capacitor is then discharged via the light-emitting diode in the optocoupler O101. The light-emitting diode is then lit and causes its associated transistor to become conducting, the transistor T103 being cut off and the transistor T104 becomes conducting with the aid of the resistor R109 and operates the output relay 14. The size of the capacitor C101 thus determines the interval within which the two output relays 14 and 24 must operate. When the capacitor C101 is discharged, the relay 14 cannot be operated any more. The starting circuit 23 acts in a corresponding manner.

The holding circuit 15 comprises an optocoupler O102 whose light-emitting diode has its anode connected to the output relay 14 and its cathode connected to a resistor R107, in turn connected to the transistor in the optocoupler O103 in the input circuit 12. The resistor R107 serves to limit the current to the light-emitting diode in the optocoupler O102. The transistor of the optocoupler O102 has an emitter which is connected to the output relay 14 and a collector which is connected to the junction between the resistor R117 and the emitter of the transistor T107 in the input circuit. The reason why the collector of the transistor in the optocoupler O102 is connected to the transistor T107 and the resistor R117 and not directly to the supply voltage is that the voltage on the collector of the transistor should rise slowly upon voltage turn-on. If the voltage does not rise slowly and the input A is closed, there is a risk that a pulse of short duration, upon voltage turn-on, will pass through to the emitter of the transistor, in which case the light-emitting diode can be lit and open the transistor which operates the relay. When the starting circuit 13 operates the output relay 14 and the input A is closed, the light-emitting diode in the optocoupler O102 is lit, and its transistor becomes conducting. When the reset signal disappears and the transistor T104 stops being conducting, the transistor in the optocoupler O102 will continue to be conducting and hold the output relay operated. The light-emitting diode continues to be lit since it is supplied with current via the closed input. When the input A is opened, the light-emitting diode ceases being lit, the transistor in the optocoupler O102 ceases to be conducting and the output relay 14 is released. The holding circuit 25 is designed and operates in a corresponding manner.

The reset device is so designed that it should be possible to connect the inputs A and B directly to a contact mat. Generally, the two outputs of a contact mat are always closed. When the mat is acted on, the outputs are short-circuited to each other. This should then result in that the two output relays 14, 24 are released. Since the input B closes to the supply voltage, while the input A closes to ground, a short-circuit between the inputs means that the supply voltage is short-circuited. Therefore, the reset device is provided with current limiting means 16 and 26 in the reset channels 1 and 2, respectively. The current limiting means 26 comprise an npn transistor T205, whose collector is connected to the supply voltage and whose emitter is connected to a resistor R210, in turn connected to the input B. The current limiting means 26 further comprise an npn transistor 206 whose base is connected to the junction between the emitter of the transistor 205 and the resistor 210, whose emitter is connected to the input B and whose collector is connected via a resistor 211 to the supply voltage. When a contact mat connected to the inputs A and B is acted on, the input B is short-circuited to the input A which then is at zero volt. The current through the resistor R210 then increases until the voltage drop over the resistor becomes so high that the transistor T206 becomes conducting, the transistor 205 being cut off so as to limit the current. Since the input B is still at zero volt, the holding circuit is broken down and the output relay 24 is released.

The current limiting means 16 in the reset channel 1 comprises three resistors R110, R111, R112, which are connected in series between the supply voltage and ground. The junction between the resistor R111 and R112 is connected via a diode D1 to the base of the transistor 205 in the other reset channel 2. The junction between the resistors R110 and R111 is connected to the base of an npn transistor T105, whose emitter is connected to ground and whose collector is connected via a resistor R113 to a pnp transistor T106, whose emitter is connected to the supply voltage and also to its base via a resistor R114 and whose collector is connected to the anode of the light-emitting diode in the optocoupler O103.

In the reset channel 1, the input A is supplied by the transistor T106, controlled by the transistor T105. When the current in the input B in the other reset channel 2 is limited by the current limiting means 26, the collector of the transistor T206 becomes close to zero volt, the transistor T105 being cut off, in turn cutting off the transistor T106. When this occurs, the lightemitting diode in the optocoupler O103 is turned off and, thus, the holding circuit 15 is broken down and the output relay 14 is released.

Many modifications of the embodiment described above are possible within the scope of the claims. The output relays 14, 24 can be replaced by transistor outputs, which can be adapted to drive external relays or contactors, whose contacts are monitored in the reset device. This solution has the advantage that the reset device becomes completely electronic and, hence, cheap to manufacture. If an external relay is defective, it can easily be exchanged.

Moreover, the reset circuits 11 and 12 may be made up differently and yet fulfil the same function. For example, the capacitor might be designed so as to be charged/discharged via a transistor or optocoupler providing a reset signal when the reset switch is opened.

In addition to the relay outputs, the reset device may be provided with signal outputs in the form of transistors or optocouplers, which are connected in series with the optocouplers O102 and O202, respectively.

## Claims

1. A safety reset device intended for use together with a personal safety protection device, comprising a reset switch (3); means (11, 21) for generating a reset signal, said generating means being so arranged that the reset switch (3) must have been both closed and opened to generate said reset signal; two reset channels (1, 2), which each comprise an input (A; B) from the personal safety protection device, an output (14; 24), holding means (15; 25) for said output and starting means (13; 23) adapted to close the output and activate the holding means (15; 25) when a reset signal is received and the input (A; B) is closed, **characterised** in that at least the starting means (13; 23) and the holding means (15; 25) are completely made up of electronic components and that corresponding electronic components in the starting means and the holding means are substantially electronically mirror-inverted, such that, when a component closes to one pole of the supply voltage in one reset channel, the corresponding component in the other reset channel closes to the other pole of the supply voltage.

2. A device as claimed in claim 1, **characterised** in that the means (11, 21) for generating a reset signal are completely made up of electronic components, and that each reset channel has its own means, separate from the other channel, for generating the reset signal.

3. A device as claimed in claim 1 or 2, **characterised** in that the electronic components comprise a microprocessor in each reset channel (1, 2).

4. A device as claimed in claim 2, **characterised** in that the means (11, 21) for generating a reset signal comprise a first capacitor (C100; C200), which is discharged and charged when the reset switch (3) is closed and opened, respectively, the degree of charge of the capacitor affecting the voltage over a first switch means (O100; O200) which is activated for a short time during the charging process for generating the reset signal.

5. A device as claimed in any one of the preceding claims, **characterised** in that each of the reset channels (1, 2) further comprises a second switch means (T101; T201) adapted to receive the reset signal and being so connected to the input (A, B) from the personal safety protection device as to be caused to close by the reset signal when the input (A, B) is closed.

6. A device as claimed in any one of the preceding claims, **characterised** in that each reset channel (1, 2) comprises current limiting means adapted to limit the current when the input from the personal safety protection device in one reset channel is short-circuited with the input from the personal safety protection device in the other reset channel so as to open the outputs (14, 24).

7. A device as claimed in any one of the preceding claims, **characterised** in that the starting means (13; 23) contain sensor means for sensing the state of the output in the other channel, said sensing means being adapted to prevent closure of the output of its reset channel, if the output in the other reset channel has been closed more than a predetermined time when the reset signal is received.

8. A device as claimed in claim 7, **characterised** in that said sensing means comprise a capacitor (C101; C201), which is charged when the output (24; 14) in the other reset channel is opened and which, when the input (A, B) from the personal safety protection device in its reset channel is closed and the reset signal is received, is discharged through a third switch means (O101; O201) which is adapted to close the output.

9. A device as claimed in claim 8, **characterised** in that the holding means (15; 25) consist of an optocoupler (O102; O202), whose light-emitting diode is activated when the third switch means closes the output and whose transistor holds the output closed as long as the input from the personal safety device is closed.

## Patentansprüche

1. Sicherheits-Nullstelleinrichtung, bestimmt für den Gebrauch zusammen mit einer persönlichen Sicherheits-Schutzvorrichtung, enthaltend einen Rückstellschalter (3); Mittel (11, 21) zur Erzeugung eines Rückstellsignals, wobei die Erzeugungsmittel so vorgesehen sind, daß der Rückstellschalter (3) zwecks Erzeugung des Rückstellsignals sowohl geschlossen als auch geöffnet werden muß; zwei Rückstellkanäle (1, 2), die jeder eine Eingabe (A, B) von der persönlichen Sicherheits-Schutzvorrichtung, eine Ausgabe (14, 24), Haltemittel (15, 25) für die Ausgabe und Startmittel (13, 23) umfassen, die adaptiert sind zum Schließen der Ausgabe und Aktivieren der Haltemittel (15, 25), wenn ein Rückstellsignal empfangen und die Eingabe (A, B) geschlossen wird,
**dadurch gekennzeichnet, daß**
wenigstens die Startmittel (13, 23) und die Haltemittel (15, 25) volständig aus elektronischen Bauteilen bestehen, und daß entsprechende elektronische Bauteile in den Startmitteln und den Haltemitteln im wesentlichen elektronisch spiegelbildlich sind, so daß, wenn ein Bauteil an einen Pol der Stromversorgung in einem Rückstellkanal angeschlossen ist, das entsprechende Bauteil im anderen Rückstellkanal an den anderen Pol der Stromversorgung angeschlossen ist.

2. Einrichtung nach Anspruch 1, dadurch gekennzeichnet, daß die Mittel (11, 21) zur Erzeugung eines Rückstellsignals vollständig aus elektronischen Bauteilen bestehen, und daß jeder Rückstellkanal, getrennt von dem anderen Kanal, seine eigenen Mittel zur Erzeugung des Rückstellsignals hat.

3. Einrichtung nach Anspruch 1 oder 2, dadurch gekennzeichnet, daß die elektronischen Bauteile einen Mikroprozessor in jedem Rückstellkanal (1, 2) umfassen.

4. Einrichtung nach Anspruch 2, dadurch gekennzeichnet, daß die Mittel (11, 21) zur Erzeugung eines Rückstellsignals einen ersten Kondensator (C100; C200) umfassen, der entladen bzw. geladen wird, wenn der Rückstellschalter (3) geschlossen bzw. geöffnet wird, wobei der Ladungszustand des Kondensators die Spannung über einem ersten Schaltmittel (O100; O200) beeinflußt, das für kurze Zeit während des Ladevorgangs zur Erzeugung des Rückstellsignals betätigt wird.

5. Einrichtung nach einem der vorhergehenden Ansprüche, dadurch gekennzeichnet, daß jeder der Rückstellkanäle (1, 2) außerdem ein zweites Schaltmittel (T101; T201) umfaßt, adaptiert zum Empfang des Rückstellsignals und derart mit der Eingabe (A, B) von der persönlichen Sicherheits-Schutzvorrichtung verbunden, daß es von dem Rückstellsignal geschlossen wird, wenn die Eingabe (A, B) geschlossen ist.

6. Einrichtung nach einem der vorhergehenden Ansprüche, dadurch gekennzeichnet, daß jeder Rückstellkanal (1, 2) Strombegrenzer enthält, adaptiert zum Begrenzen des Stroms, wenn die Eingabe von der persönlichen Sicherheits-Schutzvorrichtung in dem einen Rückstellkanal mit der Eingabe von der persönlichen Sicherheits-Schutzvorrichtung in dem anderen Rückstellkanal kurzgeschlossen wird, wobei die Ausgaben (14, 24) geöffnet werden.

7. Einrichtung nach einem der vorhergehenden Ansprüche, dadurch gekennzeichnet, daß die Startmittel (13, 23) jeweils einen Sensor zum Abfühlen des Zustandes der Ausgabe im anderen Kanal umfassen, wobei der Sensor adaptiert ist zum Verhüten des Schließens der Ausgabe seines Rückstellkanals, falls die Ausgabe in dem anderen Rückstellkanal länger als eine vorbestimmte Zeit geschlossen war, wenn das Rückstellsignal empfangen wird.

8. Einrichtung nach Anspruch 7, dadurch gekennzeichnet, daß die Sensoren jeweils einen Kondensator (C101; C201) umfassen, der geladen wird, wenn die Ausgabe (24, 14) in dem anderen Rückstellkanal geöffnet wird, und der, wenn die Eingabe (A, B) von der persönlichen Sicherheits-Schutzvorrichtung in seinem Rückstellkanal geschlossen und das Rückstellsignal empfangen wird, über ein drittes Schaltmittel (O101; O201) entladen wird, das zum Schließen der Ausgabe adaptiert ist.

9. Einrichtung nach Anspruch 8, dadurch gekennzeichnet, daß die Haltemittel (15, 25) aus einem Optokoppler (O102; O202) bestehen, dessen lichtemittierende Diode aktiviert wird, wenn das dritte Schaltmittel die Ausgabe schließt, und dessen Transistor die Ausgabe geschlossen hält, solange die Eingabe von der persönlichen Sicherheits-Schutzvorrichtung geschlossen ist.

## Revendications

1. Dispositif de remise à zéro de sécurité destiné à être utilisé en même temps qu'un dispositif de protection de sécurité individuel, comprenant un commutateur de remise à zéro (3), des moyens (11, 21) destinés à générer un signal de remise à zéro, lesdits moyens de génération étant agencés de sorte que le commutateur de remise à zéro (3) doit avoir été fermé et ouvert pour générer ledit signal de remise à zéro, deux canaux de remise à zéro (1, 2), qui comprennent chacun une entrée (A ; B) provenant du dispositif de protection de sécurité individuel, une sortie (14 ; 24), des moyens de maintien (15 ; 25) pour lesdits moyens de sortie et de démarrage (13 ; 23) adaptés pour fermer la sortie et activer les moyens de maintien (15 ; 25) lorsqu'un signal de remise à zéro est reçu et que l'entrée (A ; B) est fermée, caractérisé en ce qu'au moins les moyens de démarrage (13 ; 23) et les moyens de maintien (15 ; 25) sont totalement constitués de composants électroniques et en ce que les composants électroniques correspondants dans les moyens de démarrage et dans les moyens de maintien sont sensiblement inversés électroniquement, de sorte que, lorsqu'un composant se ferme à un pôle de la tension d'alimentation dans un canal de remise à zéro, le composant correspondant dans l'autre canal de remise à zéro se ferme à l'autre pôle de la tension d'alimentation.

2. Dispositif selon la revendication 1, caractérisé en ce que les moyens (11, 21) destinés à générer un signal de remise à zéro sont totalement constitués de composants électroniques et en ce que chaque canal de remise à zéro comporte ses propres moyens, séparés de l'autre canal, pour générer le signal de remise à zéro.

3. Dispositif selon la revendication 1 ou 2, caractérisé en ce que les composants électroniques comprennent un microprocesseur dans chaque canal de remise à zéro (1, 2).

4. Dispositif selon la revendication 2, caractérisé en ce que les moyens (11, 21) destinés à générer un signal de remise à zéro comprennent un premier condensateur (C100 ; C200), qui est déchargé et chargé lorsque le commutateur de remise à zéro (3) est fermé et ouvert, respectivement, le degré de charge du condensateur affectant la tension sur des premiers moyens de commutation (O100 ; O200) qui sont activés pendant un court instant pendant l'opération de charge pour générer le signal de remise à zéro.

5. Dispositif selon l'une quelconque des revendications précédentes, caractérisé en ce que chacun des canaux de remise à zéro (1, 2) comprend, de plus, des seconds moyens de commutation (T101 ; T201) adaptés pour recevoir le signal de remise à zéro et connectés à l'entrée (A, B) provenant du dispositif de protection de sécurité individuel de manière à les amener à se fermer par le signal de remise à zéro lorsque l'entrée (A, B) est fermée.

6. Dispositif selon l'une quelconque des revendications caractérisé en ce que chaque canal de remise à zéro (1, 2) comprend des moyens de limitation de courant adaptés pour limiter le courant lorsque l'entrée provenant du dispositif de protection de sécurité individuel dans un canal de remise à zéro est mise en court-circuit avec l'entrée provenant du dispositif de protection de sécurité individuel dans l'autre canal de remise à zéro de manière à ouvrir les sorties (14, 24).

7. Dispositif selon l'une quelconque des revendications précédentes, caractérisé en ce que les moyens de démarrage (13 ; 23) comprennent des moyens de détection destinés à détecter l'état de la sortie dans l'autre canal, lesdits moyens de détection étant adaptés pour empêcher la fermeture de la sortie de son canal de remise à zéro, si la sortie dans l'autre canal de remise à zéro a été fermée plus longtemps qu'un temps prédéterminé lorsque le signal de remise à zéro est reçu.

8. Dispositif selon la revendication 7, caractérisé en ce que lesdits moyens de détection comprennent un condensateur (C101 ; C201), qui est chargé lorsque la sortie (24 ; 14) dans l'autre canal de remise à zéro est ouverte et qui, lorsque l'entrée (A, B) provenant du dispositif de protection de sécurité individuel dans son canal de remise à zéro est fermée et que le signal de remise à zéro est reçu, est déchargé à travers des troisièmes moyens de commutation (O101 ; O201) qui sont adaptés pour fermer la sortie.

9. Dispositif selon la revendication 8, caractérisé en ce que les moyens de maintien (15 ; 25) consistent en un optocoupleur (O102 ; O202), dont la diode électroluminescente est activée lorsque les troisièmes moyens de commutation ferment la sortie et dont le transistor maintient la sortie fermée aussi longtemps que l'entrée provenant du dispositif de sécurité individuel est fermée.
